# EUROPEAN PATENT SPECIFICATION

(11) **EP 4 631 336 B1**
(45) Date of publication and mention of the grant of the patent: **08.07.2026**
(21) Application number: 25156032.2
(22) Date of filing: 05.02.2025
(51) Int. Cl.: A01D 34/00, A01D 34/84

(54) **A ROBOTIC LAWN MOWER WITH ENHANCED CUTTING PROPERTIES**
ROBOTISCHER RASENMÄHER MIT VERBESSERTEN SCHNEIDEIGENSCHAFTEN
TONDEUSE À GAZON ROBOTIQUE AYANT DES PROPRIÉTÉS DE COUPE AMÉLIORÉES

(30) Priority: 09.04.2024 SE 2450372
(43) Date of publication of application: 15.10.2025
(73) Proprietor: Husqvarna AB, 561 82 Huskvarna (SE)
(72) Inventor: Jansson, Viktor, Huskvarna (SE); Axelsson, Erik, Huskvarna (SE); Liljedahl, Dan, Huskvarna (SE); Danielsson, Oscar, Huskvarna (SE)

(56) References cited:
- EP-A1- 4 089 500
- WO-A1-2022/250589

## Description

### TECHNICAL FIELD

The present disclosure relates to a robotic lawn mower that comprises a control unit adapted to control the operation of the robotic lawn mower, and a first rotatable grass cutting disc having a rotation axis.

### BACKGROUND

Robotic lawn mowers, such as for example robotic lawn mowers, are becoming increasingly more popular. A robotic lawn mower is usually battery-powered by means of a rechargeable battery and is adapted to cut grass on a user's lawn automatically. A robotic lawn mower can be charged automatically without intervention of the user, and does normally not need to be manually managed after being set once.

In a typical deployment a work area, such as a garden, park, sports field, golf court and the like, the work area is enclosed by a boundary that can be in the form of a boundary wire with the purpose of keeping the robotic lawn mower inside the work area. An electric control signal may be transmitted through the boundary wire thereby generating an (electro-) magnetic field emanating from the boundary wire. The robotic working tool is typically arranged with one or more sensors adapted to sense the control signal.

Alternatively, or as a supplement, the robotic lawn mower can be equipped with a navigation system that is adapted for satellite navigation by means of GPS (Global Positioning System) or some other Global Navigation Satellite System (GNSS) system, for example using Real Time Kinematic (RTK). A boundary is in this case not defined by a physical wire, but by a virtual boundary.

A lawn is commonly mowed systematically when mowed manually, but doing this autonomously with full lawn coverage has been a tedious task to solve. The introduction of different high accuracy positioning systems has made this task easier, and more and more autonomous lawn mowers have started to cut the lawn systematically. One common way of mowing a lawn systematically is to mow it in straight lines.

A problem associated with robotic lawn mowers is that they normally have a limited ability to cut grass close to objects and borders that may lie outside a cutting area boundary that may be defined by means of a boundary wire. That is, normally, the cutting unit is arranged at the underside of a lawn mower body of the robotic lawn mower and portions of the robotic lawn mower body, and/or wheels attached thereto, may hinder the cutting unit from reaching grass close to objects and borders. If so, the cutting result is impaired because there will be uncut grass close to objects such as trees, stones, furniture, building walls, and the like. This has usually been solved by using a separate manual work tool, such as a grass trimmer.

Document WO 2022/250589 A1 discloses a robotic lawn mower according to the preamble of claim 1.

It is desirable to provide more flexible and efficient robotic lawn mowers, and methods for robotic lawn mowers that enable systematic mowing and lawn edge cutting.

### SUMMARY

The object of the present invention is to provide means and methods for cutting grass close to objects and borders while maintaining an efficient grass cutting procedure, in particular systematic mowing.

This object is achieved by means of a robotic lawn mower according to claim 1. The lawn mower comprises a control unit adapted to control the operation of the robotic lawn mower, and at least a first rotatable grass cutting disc having a rotation axis. A first end portion is facing a forward travelling direction and a second end portion is facing a reverse travelling direction, the robotic lawn mower having a longitudinal mower extension extending between the end portions. When the robotic lawn mower, during grass cutting in the forward direction in a cutting lane having a main lane extension in an operation area, is approaching a boundary of the operation area, where the boundary has a main boundary extension, the control unit is adapted to control the robotic lawn mower such that the second end portion performs a first arcuate movement in a first arcuate direction along a first cutting arc. The first cutting arc has a first angular span such that the mower extension is positioned mainly parallel to the boundary extension.

The control unit is further adapted to control the robotic lawn mower to move a cutting lane change distance mainly parallel to the boundary extension in the forward travelling direction until an adjacent further cutting lane, having a further main lane extension, is sufficiently reached for enabling cutting, and to control the robotic lawn mower such that the second end portion performs a second arcuate movement in a second arcuate direction, opposite the first arcuate direction, along a second cutting arc, having a second angular span, such that the longitudinal extension is positioned mainly parallel to the further main lane extension. The control unit is further adapted to control the robotic lawn mower to move in the forward travelling direction along the further main lane extension in the further cutting lane.

In this manner, a robotic lawn mower is provided which supports edge cutting during systematic mowing, enabling grass to be cut close to edges during systematic mowing. At the boundary, boundary cutting can be performed by means of the arcuate movements along the cutting arcs described above. The robotic lawn mower can approach the boundary at any suitable angle.

According to some aspects, the robotic lawn mower comprises a body, at least two drive wheels arranged along a drive wheel axis with a center positioned between the drive wheels. The robotic lawn mower further comprises at least one swivelable wheel. When the robotic lawn mower is approaching the boundary, the control unit is adapted to control the drive wheels to turn in mutually different directions such that the second end portion of the robotic lawn mower performs the first arcuate movement in the first arcuate direction along the first cutting arc having the first angular span, enabling the first cutting disc to cut grass within the first cutting arc. The control unit is further adapted to control the drive wheels to move the robotic lawn mower the cutting lane change distance mainly parallel to the boundary extension of the boundary in the forward travelling direction until the adjacent further cutting lane is sufficiently reached for enabling cutting, and to control the drive wheels to turn in mutually different directions such that the second end portion of the robotic lawn mower performs the second arcuate movement in the second arcuate direction, opposite the first arcuate direction, along the second cutting arc having the second angular span. The control unit is further adapted to control the drive wheels to move the robotic lawn mower in the forward travelling direction along the further main lane extension in the further cutting lane.

In this manner, the drive wheels are controlled to perform the arcuate movements. It should be noted that the drive wheels may be adapted to run on a surface on which the robotic lawnmower in its travelling, or alternatively drive other propulsion means such as for example caterpillar belts and the like.

According to some aspects, when the robotic lawn mower is approaching the boundary, the control unit is adapted to position the robotic lawn mower such that there is a predetermined shortest distance between the center and the boundary. According to some further aspects, the boundary is positioned between a border and the operation area, where the shortest distance admits the first cutting arc to have a closest arc portion that is closest to the border without passing the border.

In this way, it is possible to cut grass over the boundary, close to a border such as a lawn edge, in a controlled manner.

According to some aspects, the first angular span lies in the interval 260°-280°, and more preferably in the interval 265°-275°. According to some further aspects, the second angular span lies in the interval 80°-100°, and more preferably in the interval 85°-95°. This means that the robotic lawn mower 100 only needs to pivot for ~360° (~270° + ~90°).

According to some aspects, the control unit is adapted to position the robotic lawn mower by means of input derived from a navigation sensor arrangement and/or at least one environment detection device comprised in the robotic lawn mower.

This means that the robotic lawn mower can be positioned for performing an arcuate movement along a cutting arc according to the above directly, without first having to detect a boundary wire and then move back to the position.

According to some aspects, the navigation sensor arrangement comprises at least one of satellite signal navigation sensors, and deduced reckoning sensors. According to some further aspects, the navigation sensor arrangement comprises deduced reckoning sensors that include visual sensors for Simultaneous Localization And Mapping (SLAM) navigation. According to some further aspects, the navigation sensor arrangement is adapted for navigation by means of active local radio beacons using Ultra Wide Band (UWB).

This means that the navigation sensor arrangement that can be used for the present disclosure can be formed in many different ways.

According to some aspects, the robotic lawn mower comprises at least one environment detection device adapted to detect objects, where said environment detection device comprises at least one of a radar transceiver, a camera device, an ultrasonic device, a Lidar device, and/or a boundary wire sensor.

This means that when a boundary wire sensor is used, the robotic lawn mower can be positioned such that there is a shortest distance dₛ between the center and the boundary for the case with a boundary wire defining the boundary.

The object of the present invention is also achieved by means of a method according to claim 12, the control unit arrangement according to claim 18, and a computer program product according to claim 19, that are associated with above advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present disclosure will become apparent when studying the appended claims and the following description.

### BRIEF DESCRIPTION OF THE DRAWINGS

The present disclosure will now be described more in detail with reference to the appended drawings, where:
- Figure 1: shows a top view of a robotic lawn mower;
- Figure 2: shows a bottom view of the robotic lawn mower;
- Figure 3: shows a side perspective bottom view of the robotic lawn mower;
- Figure 4: shows a side perspective bottom view of an enlarged part the robotic lawn mower;
- Figure 5: shows a side view of the robotic lawn mower;
- Figure 6-11: show a schematic top view of robotic lawn mower actions having approached and reached a boundary according to a first example;
- Figure 12: shows a schematic top view of a robotic lawn mower system according to a first example;
- Figure 13-18: show a schematic top view of robotic lawn mower actions having approached and reached a boundary according to a second example;
- Figure 19: shows a schematic top view of robotic lawn mower system according to a second example;
- Figure 20: shows a schematic view of a control unit;
- Figure 21: shows a computer program product; and
- Figure 22: shows a flowchart for methods according to the present disclosure.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the present disclosure. As used herein, the singular forms "a", "an" and "the" are intended to include the plural forms as well, unless the context clearly indicates otherwise.

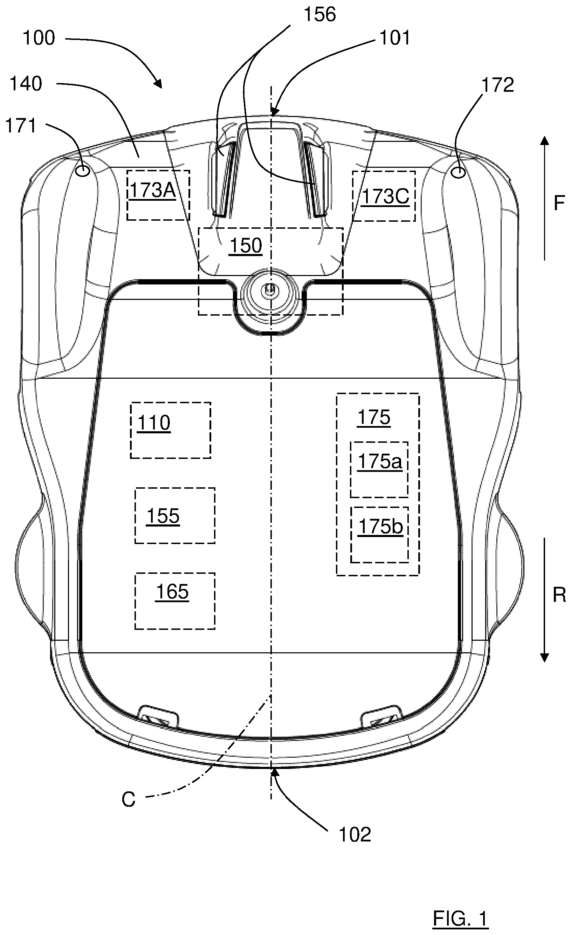

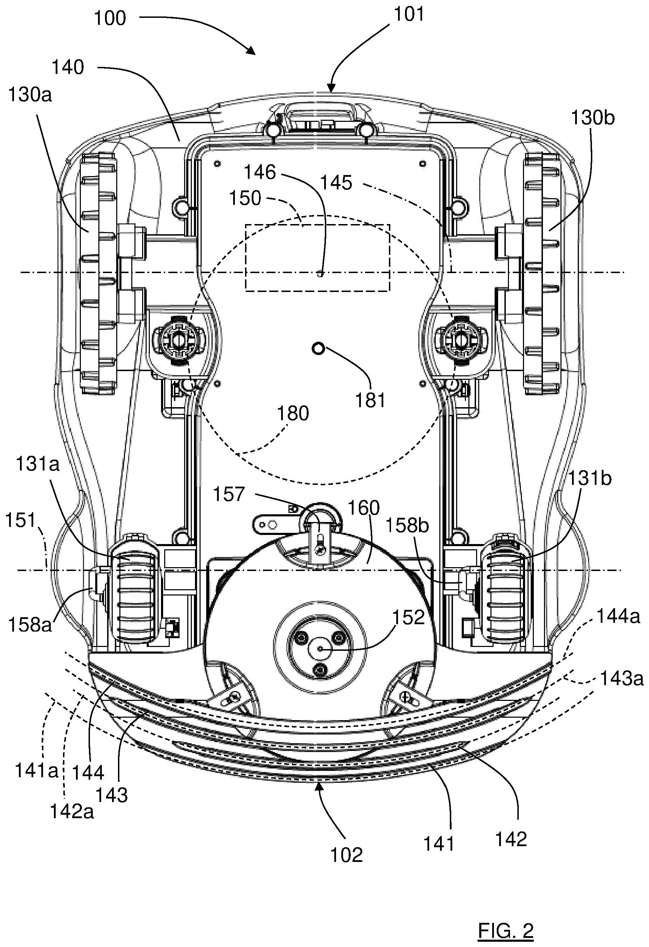

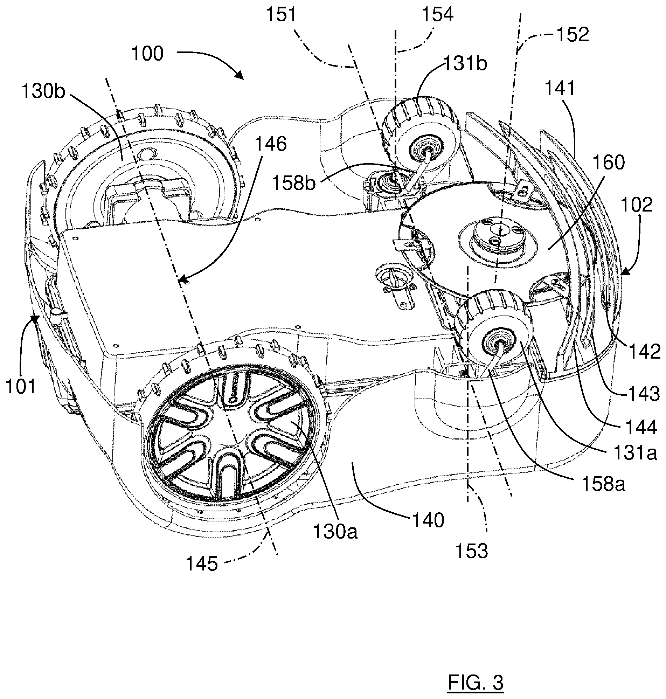

Figure 1 shows a top view of a robotic lawn mower 100, Figure 2 shows a bottom view of the robotic lawn mower 100, and Figure 3 shows a side perspective bottom view of the robotic lawn mower.

The robotic lawn mower comprises a control unit 110 adapted to control the operation of the robotic lawn mower 100, and at least a first rotatable grass cutting disc 160 having a rotation axis 152, where a first end portion 101 is facing a forward travelling direction F and a second end portion 102 is facing a reverse travelling direction R, the robotic lawn mower 100 having a longitudinal mower extension C extending between the end portions 101, 102.

According to some aspects, the robotic lawn mower 100 comprises a body 140 and at least two drive wheels 130a, 130b arranged along a drive wheel axis 145 with a center 146, the center 146 being positioned between the drive wheels 130a, 130b. According to some further aspects, the robotic lawn mower 100 further comprises at least one swivelable wheel 131a, 131b, where at least one swivelable wheel may have a corresponding swivel axis 153, 154. The drive wheel axis 145 is an imaginary axis, not being constituted by a physical axle that connects the drive wheels 130a, 130b.

According to some aspects, as illustrated in this example, the robotic lawn mower 100 comprises four wheels, two larger drive wheels 130a, 130b and two smaller swivelable wheels 131a, 131b that are in form of castor wheels and are arranged to swivel around a corresponding swivel axis 153, 154 when the robotic lawn mower 100 is turning. For this purpose, the swivelable wheels 131a, 131b are connected to the body 140 by means of corresponding swivel wheel holders 158a, 158b, where, according to some aspects, it is the swivel wheel holders 158a, 158b that swivel in relation to the body and are fixed in relation to the swivelable wheels 131a, 131b. The opposite is of course conceivable.

The robotic lawn mower 100 may be a multi-chassis type or a mono-chassis type. A multi-chassis type comprises more than one body parts that are movable with respect to one another. A mono-chassis type comprises only one main body part. In this example embodiment, the robotic lawn mower 100 is of a mono-chassis type, having a main body part 140. The main body part 140 substantially houses all components of the robotic lawn mower 100.

According to some aspects, the robotic lawn mower 100 also comprises at least two electric motor arrangements 150, 165 (only schematically indicated in Figure 2) and at least one rechargeable electric power source such as a battery 155 (only schematically indicated in Figure 1) for providing power to the electric motor arrangements 150, 165. The battery 155 is arranged to be charged by means of received charging current from a charging station, received through charging skids 156 or other suitable charging connectors. Inductive charging without galvanic contact, only by means of electric contact, is also conceivable. The battery is generally constituted by a rechargeable electric power source 155 that comprises one or more batteries that can be separately arranged or be arranged in an integrated manner to form a combined battery.

The drive wheels 130a, 130b, are according to some aspects drivably connected to a first electric motor arrangement 150, where the first electric motor arrangement 150 is adapted to drive the drive wheels 130a, 130b in the same rotation direction, or in different rotation directions, and at different rotational speeds. According to some aspects, the first electric motor arrangement 150 comprises a separate electrical motor for each 130a, 130b, and according to some further aspects each such electric motor is mounted to a corresponding drive wheel 130a, 130b, for example in a corresponding drive wheel hub.

According to some aspects, the first rotatable grass cutting disc 160, referred to as the first cutting disc 160, is drivably connected to a second electric motor arrangement 165 that in this example is in the form of a cutter motor. According to some aspects, the first cutting disc 160 comprises a plurality of cutting knives 157, in this example three cutting knives 157 are shown (only one indicated in Figure 2). The first cutting disc 160 is according to some aspects at least partly positioned between the swivel attachment axis 151 and the second end portion 102. This means that at least some part of the first cutting disc 160 is positioned closer to the second end portion 102 than any part of the swivel attachment axis 151.

In this way, the first cutting disc 160 is positioned such that it can move laterally in an arcuate manner when the drive wheels 130a, 130b are driven in different rotation directions by the first electric motor arrangement 150.

According to some aspects, the rotation axis 152 is positioned between the swivel attachment axis 151 and the second end portion 102 when the rotation axis 152 passes through the first cutting disc 160. In this manner, the first cutting disc 160 can easily follow the movement of the second end portion 102, in particular when the drive wheels 130a, 130b are driven in different rotation directions by the first electric motor arrangement 150.

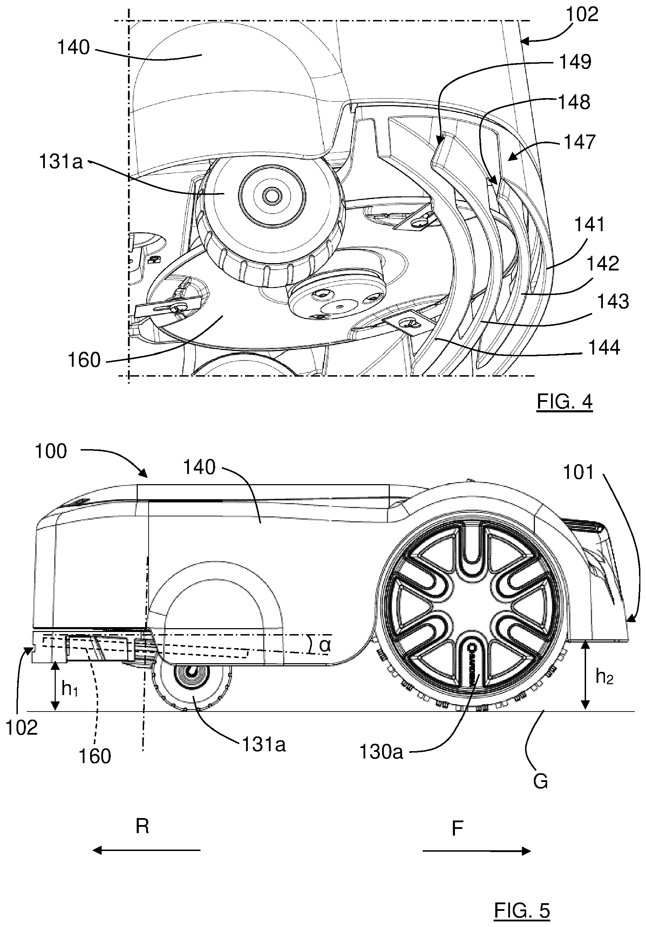

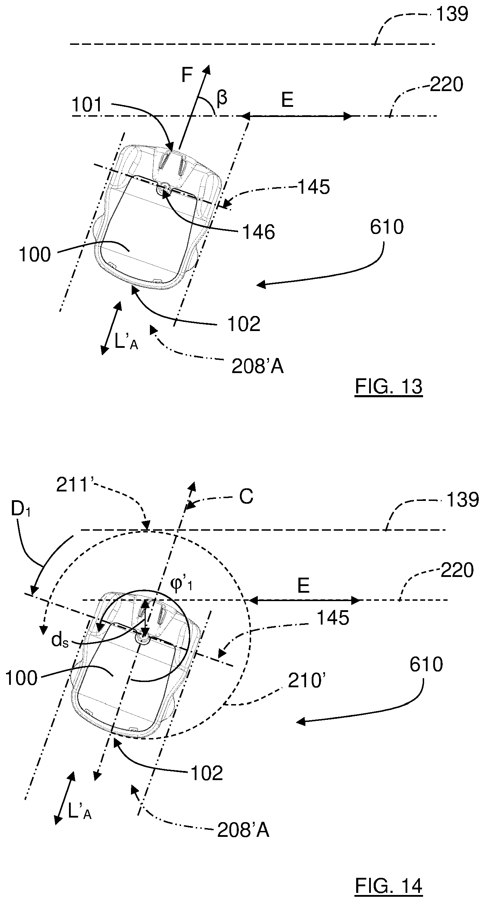

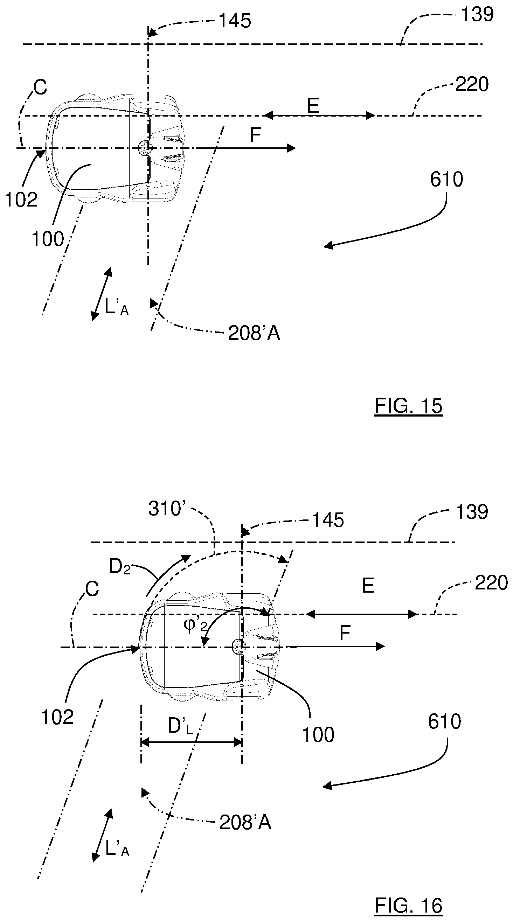

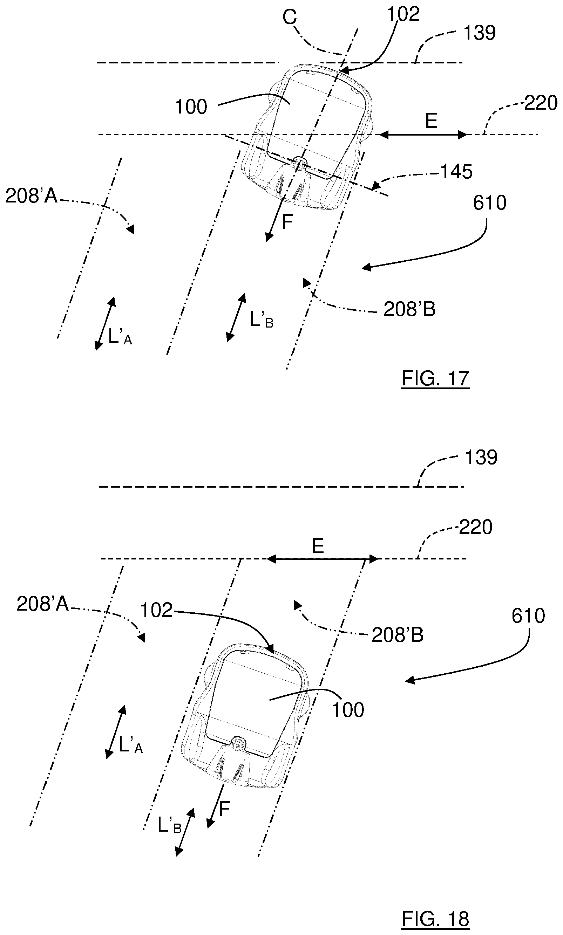

In the following it is referred to Figurer 5-12 and Figure 13-19, the robotic lawn mower 100 is approaching a boundary 220 of 610 operation area 610 during grass cutting in the forward direction F in a cutting lane 208A, 208'A having a main lane extension L_{A}, L'_{A} in an operation area 610. In a first example as shown in Figure 5-12 the robotic lawn mower 100 is approaching a boundary at a perpendicular angle, and in a second example as shown in Figure 13-19 the robotic lawn mower 100 is approaching a boundary at an inclined angle β that is separate from 90°.

The boundary 220 can for example be defined by a boundary wire or be in the form of a virtual boundary.

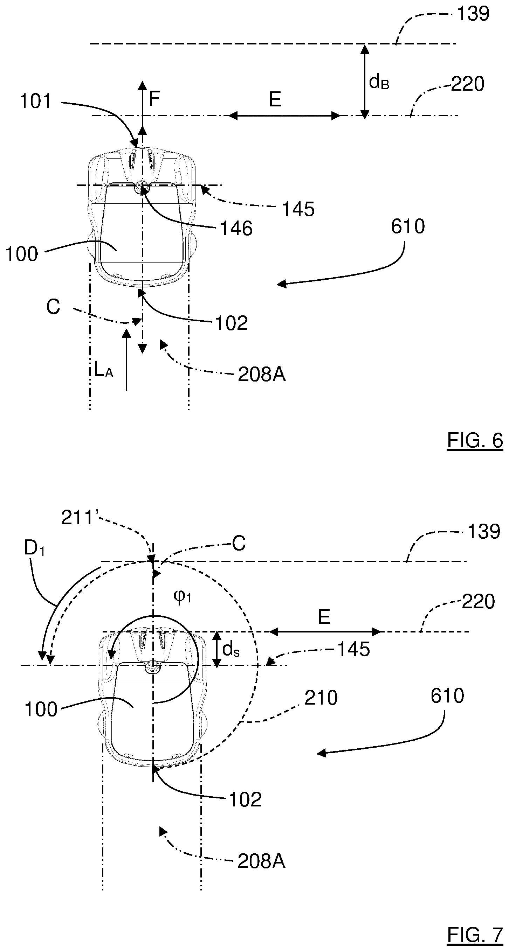

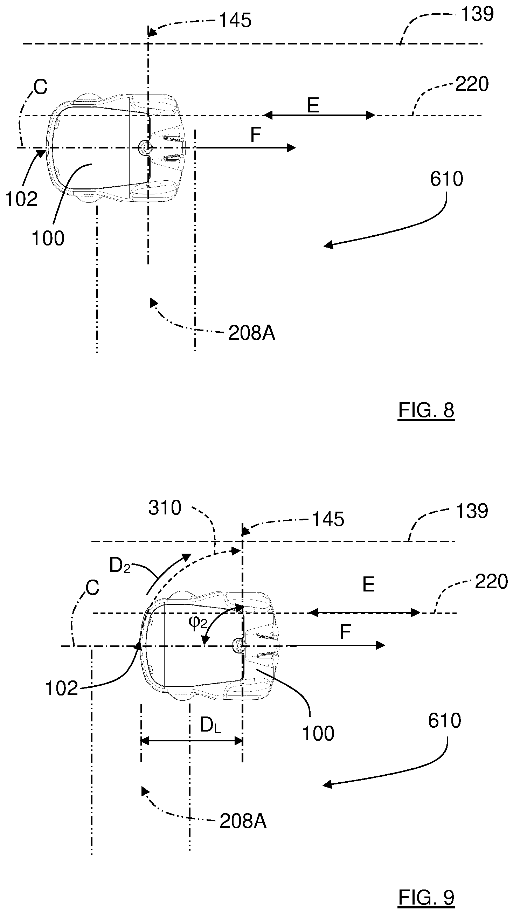

Generally, when the robotic lawn mower 100 is approaching the boundary 220 as set out above, the control unit 110 is, according to the present disclosure, adapted to control the robotic lawn mower 100 such that the second end portion 102 performs a first arcuate movement in a first arcuate direction D₁ along a first cutting arc 210, 210' having a first angular span φ₁, φ'₁ such that the mower extension C is positioned mainly parallel to the boundary extension E as illustrated in Figure 6-7 and Figure 13-14. The control unit 110 is further adapted to control the robotic lawn mower 100 to move a cutting lane change distance D_{L}, D'_{L} mainly parallel to the boundary extension E in the forward travelling direction F until an adjacent further cutting lane 208B 208'B, having a further main lane extension L_{B}, L'_{B}, is sufficiently reached for enabling cutting, as illustrated in Figure 8-9 and Figure 15-16.

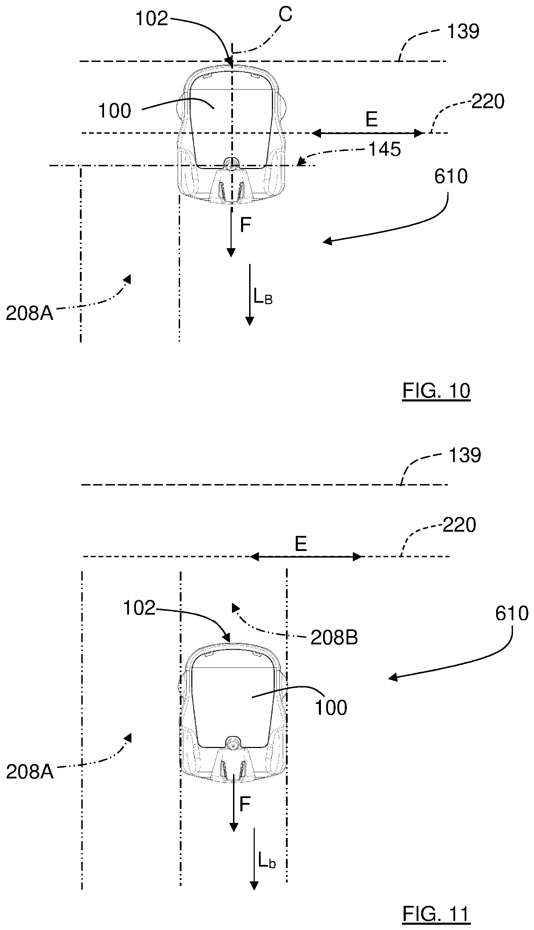

The control unit 110 is then adapted to control the robotic lawn mower 100 such that the second end portion 102 performs a second arcuate movement in a second arcuate direction D₂, opposite the first arcuate direction D₁, along a second cutting arc 310, 310' having a second angular span φ₂, φ'₂ such that the longitudinal extension C is positioned mainly parallel to the further main lane extension L_{B}, L'_{B}, as illustrated in Figure 9-10 and Figure 16-17. The control unit 110 is further adapted to control the robotic lawn mower 100 to move in the forward travelling direction F along the further main lane extension L_{B}, L'_{B}, in the further cutting lane 208B, 208'B, as illustrated in Figure 10-11 and Figure 17-18.

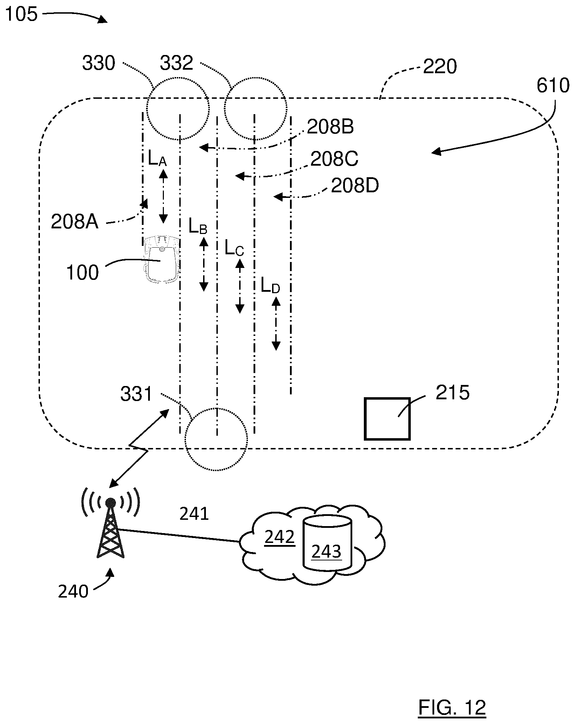

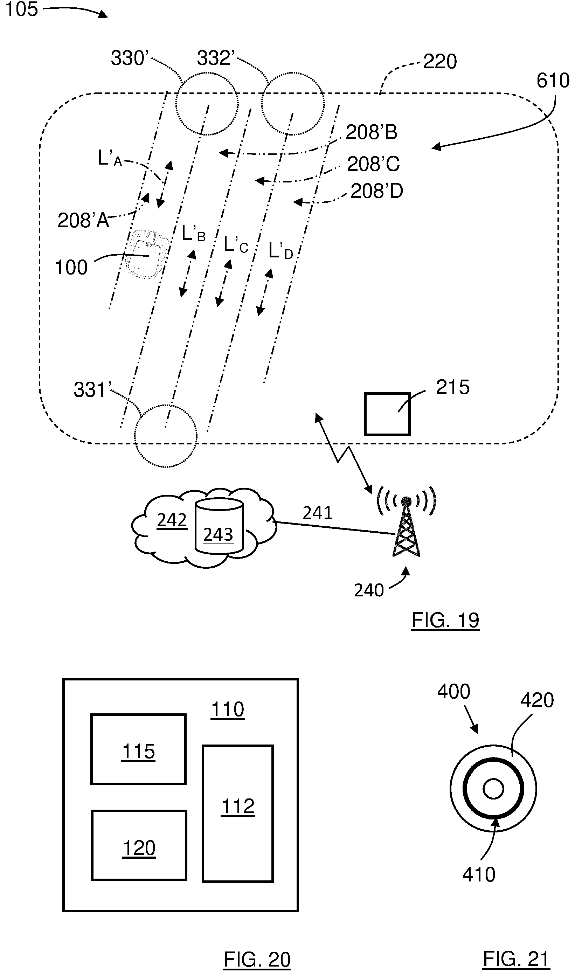

In this manner, a robotic lawn mower 100 is provided which supports edge cutting during systematic mowing, enabling grass to be cut close to edges during systematic mowing. This is also illustrated in Figure 12 and Figure 19. In Figure 12, the robotic lawn mower moves in straight lines in adjacent cutting lanes 208A-208D, and so on, along corresponding main lane extensions L_{A} - L_{D}. At the boundary 220, boundary cutting 330, 331, 332 (only schematically indicated) is performed by means of the arcuate movements along the cutting arcs 210, 310 described above. Here, the robotic lawn mower 100 is approaching the boundary 220 at a mainly perpendicular angle.

In Figure 19, the robotic lawn mower moves in straight lines in adjacent cutting lanes 208'A-208'D, and so on, along corresponding main lane extensions L'_{A} - L'_{D}. At the boundary 220, boundary cutting 330', 331', 332' (only schematically indicated) is performed by means of the arcuate movements along the cutting arcs 210', 310 'described above. Here, the robotic lawn mower 100 is approaching the boundary 220 at the inclined angle β, illustrated in Figure 13, that is separate from 90°, for example in the interval 60°-80°.

According to some aspects, when the robotic lawn mower 100 is approaching the boundary 220, the control unit 110 is adapted to control the drive wheels 130a, 130b to turn in mutually different directions such that the second end portion 102 of the robotic lawn mower 100 performs the first arcuate movement in the first arcuate direction D₁ along the first cutting arc 210, 210'having the first angular span φ₁, φ'₁, enabling the first cutting disc 160 to cut grass within the first cutting arc 210, 210'.

The control unit 110 is further adapted to control the drive wheels 130a, 130b to move the robotic lawn mower 100 the cutting lane change distance D_{L}, D'_{L} mainly parallel to the boundary extension E of the boundary 220 in the forward travelling direction F until the adjacent further cutting lane 208B, 280'B is sufficiently reached for enabling cutting. The control unit 110 is then adapted to control the drive wheels 130a, 130b to turn in mutually different directions such that the second end portion 102 of the robotic lawn mower 100 performs the second arcuate movement in the second arcuate direction D₂, opposite the first arcuate direction D₁, along the second cutting arc 310, 310' having the second angular span φ₂, φ'₂, and to control the drive wheels 130a, 130b to move the robotic lawn mower 100 in the forward travelling direction F along the further main lane extension L_{B}, L'_{B} in the further cutting lane 208B, 208'B.

In this manner, the drive wheels 130a, 130b are controlled to perform the arcuate movements. It should be noted that the drive wheels 131, 132 may be adapted to run on a surface G on which the robotic lawnmower in its travelling, or alternatively drive other propulsion means such as for example caterpillar belts and the like.

According to some aspects, as illustrated in Figure 7, the first angular span φ₁ lies in the interval 260°-280°, and more preferably in the interval 265°-275°.

According to some aspects, as illustrated in Figure 9, the second angular span φ₂ lies in the interval 80°-100°, and more preferably in the interval 85°-95°.

This means that the robotic lawn mower 100 only needs to pivot for ~360° (~270° + ~90°).

According to some aspects, the control unit 110 is adapted to position the robotic lawn mower 100 such that there is a predetermined shortest distance dₛ between the center 146 and the boundary 220. The shortest distance dₛ can be chosen to admit the cutting arcs 210, 310 to cross the boundary to a desired extent without passing a border 139.

According to some aspects, the boundary 220 is positioned between the border 139 and the operation area 610, and where the shortest distance dₛ admits the first cutting arc 210, 210' to have a closest arc portion 211, 211' that is closest to the border 139 without passing the border 139. The border 139 can for example be constituted by an end of the lawn, for example a wall, a fence or a gravel walk.

In this way, it is possible to cut grass over the boundary 220, close to a border 139 such as a lawn edge 139, in a controlled manner. According to some aspects, there is a border distance d_{B} between the border 139 and the boundary 220, the border distance d_{B} for example being between 20cm and 40cm. Other values for the border distance d_{B} are of course conceivable, and the distance d_{B} may vary along the boundary 220, such that the boundary 220 is exceeded only to a desired or allowed extent. The border 139 can thus be in many forms and still allow a relatively close cutting of the grass by means of robotic lawn mower 100 performing the arcuate movement according to the above.

According to some aspects, the control unit 110 is adapted to position the robotic lawn mower 100 by means of input derived from a navigation sensor arrangement 175 and/or at least one environment detection device 170, 171, 173 comprised in the robotic lawn mower 100.

This means that the robotic lawn mower can be positioned for performing an arcuate movement along a cutting arc according to the above directly, without first having to detect a boundary wire and then move back to the position.

According to some aspects, the navigation sensor arrangement 175 comprises at least one of
- satellite signal navigation sensor 175a; and
- deduced reckoning sensors 175b.

The deduced reckoning sensors 175b may be odometers, accelerometers or other deduced reckoning sensors.

According to some aspects, the navigation sensor arrangement 175 comprises deduced reckoning sensors 175b that include visual sensors for Simultaneous Localization And Mapping, SLAM, navigation.

According to some aspects, the navigation sensor arrangement 175 is adapted for navigation by means of active local radio beacons using Ultra Wide Band, UWB.

This means that the navigation sensor arrangement 175 can be formed in many different ways. In some embodiments the deduced reckoning sensors 175b include visual sensors, such as for Simultaneous Localization And Mapping, SLAM, navigation or other visual navigation. In such embodiments the boundary may be bounded by reference objects, not shown explicitly in any Figure, but deemed to be included in the boundary 220.

In some embodiments, the deduced reckoning sensors 175b are comprised in the propulsion device, wherein a deduced reckoning navigation may be provided by knowing the current supplied to a motor and the time the current is supplied, which will give an indication of the speed and thereby distance for the corresponding wheel.

The deduced reckoning sensors 175b, especially in combination with the visual odometry sensor, enables the root to operate according to a map of the operational area. In some such embodiments, the navigation is based on SLAM, and in some embodiments, where a visual odometry sensor, such as a camera, is utilized, the navigation is based on V-SLAM.

According to some aspects, the robotic lawn mower 100 comprises at least one environment detection device 170, 171, 173 adapted to detect objects, where said environment detection device 170, 171, 173 comprises at least one of
- a radar transceiver 170, 171,
- a camera device,
- an ultrasonic device,
- a Lidar device, and/or
- a boundary wire sensor 173.

This means that when a boundary wire sensor 173 is used, the robotic lawn mower 100 can be positioned such that there is a shortest distance dₛ between the center 146 and the boundary 220 for the case with a boundary wire defining the boundary.

According to some aspects, with reference to Figure 2, Figure 3 and Figure 4, the robotic lawn mower 100 further comprises a first arcuate protective wall 141 that at least partly runs along the second end portion 102, and at least one further arcuate protective wall 142, 143, 144, the protective walls 141, 142, 143, 144 extending from the body 140 towards the ground G during normal running, the protective walls 141, 142, 143, 144 being radially separated.

In this example, there are four protective walls 141, 142, 143, 144; the first protective wall 141, a second protective wall 142, a third protective walls 14, and a fourth protective wall 144. Since the first cutting disc 160 is at least partly positioned between the swivel attachment axis 151 and the second end portion 102, and, according to some aspects, the rotation axis 152 is positioned between the swivel attachment axis 151 and the second end portion 102 when the rotation axis 152 passes through the first cutting disc 160, the protective walls 141, 142, 143, 144 confer an injury protection for humans and animals that come close to the second end portion 102 during normal running.

There is a first distance h₁ between the first protective wall 141 and the ground G, where the first distance h₁ of course varies slightly during running. There is a second distance h₂ between the first end portion 101 and the ground G, where the second distance h₂ of course also varies slightly during running. In this example, the first distance h₁ falls below the second distance h₂, and in the case of the first end portion 101 is facing the forward travelling direction F, this means that relatively high grass can enter between the robotic lawn mower 100 and the ground G without being bent, or only being slightly bent, before reaching the first cutting disc 160. A spring-back effect for bent grass can need an additional distance and thus also an additional time to bend back.

This is advantageous since this provides a more efficient cutting of the grass, and is enabled by having the first cutting disc 160 positioned relatively close to the second end portion 102 where the first cutting disc 160 is protected by means of the protective walls 141, 142, 143, 144.

According to some aspects, the protective walls 141, 142, 143, 144 are partly positioned between the first cutting disc 160 and the ground G during normal running. In this manner, the first cutting disc 160 can reach the second end portion 102 while humans and animals that come close to the second end portion 102 during normal running still are protected from injury.

According to some aspects, the protective walls 141, 142, 143, 144 at least mainly follow respective protective wall arcs 141a, 142a, 143a, 144a, where all protective wall arcs 141a, 142a, 143a, 144a have a common center 146. According to some aspects, the common center 146 is the center of the drive wheel axis 145. In this way, when the arcuate movement is performed, the grass will not be bent when moving between the protective walls 141, 142, 143, 144. According to some aspects, the radial separation of the protective walls 141, 142, 143, 144 relates to the common center.

According to some aspects, an arcuate extension of at least one protective wall 141, 142, 143, at least mainly following a respective protective wall arc, comprises tapered end portions 147, 148, 149. In this example, this is the case for the first three protective walls 141, 142, 143, and enables the grass to be easily divided between the protective walls 141, 142, 143, 144 when the arcuate movement is performed.

It is to be noted that, according to some aspects, the rotation axis 152 can be tilted with a cutting disc angle of incidence, constituting an angle of approach α as illustrated in Figure 5, towards the ground G. Such a tilt improves the cutting result, the first cutting disc 160 being closer to the ground G where the first cutting disc 160 faces the forward travelling direction F. In the case where the first end portion 101 is facing the forward travelling direction F and the second end portion 102 is facing the reverse travelling direction R, there is an advantage since the first distance h₁ between the first protective wall 141 and the ground G can be increased.

It is to be noted that all position references to the rotation axis 152 are intended to be considered when the rotation axis 152 passes through the first cutting disc 160.

As indicated in Figure 1, Figure 12 and Figure 19, according to some aspects, the control unit 110 may be adapted to be in contact, suitably by means of wireless communication 241, with external units, for example a communication system 240. This may, e.g., be a third generation partnership program (3GPP) defined access network like the fourth generation (4G) or the fifth generation (5G) access networks or a satellite system such as GPS. The access network may provide access to remote networks and other resources such as, e.g., the Internet.

It is also appreciated that some processing functions may be performed by resources in a remote network 242, such as a remote server 243.

The control unit 110 may be constituted by one or more control unit parts that can be separate from each other. Some or all control unit parts may be comprised in a control unit arrangement 110 and/or a remote server 243.

In Figure 20 it is schematically illustrated, in terms of a number of functional units, the components of the control unit 110 according to embodiments of the discussions herein. Processing circuitry 115 is provided using any combination of one or more of a suitable central processing unit CPU, multiprocessor, microcontroller, digital signal processor DSP, etc., capable of executing software instructions stored in a computer program product, e.g. in the form of a storage medium 120. The processing circuitry 115 may further be provided as at least one application specific integrated circuit ASIC, or field programmable gate array FPGA. The processing circuitry thus comprises a plurality of digital logic components.

Particularly, the processing circuitry 115 is configured to cause the control unit 110 to perform a set of operations, or steps to control the operation of the robotic lawn mower 100 including, but not being limited to, controlling the radar transceivers 170, processing measurements results received via the radar transceivers 170, and the propulsion of the robotic lawn mower 100. For example, the storage medium 120 may store the set of operations, and the processing circuitry 115 may be configured to retrieve the set of operations from the storage medium 120 to cause the control unit 110 to perform the set of operations. The set of operations may be provided as a set of executable instructions. Thus, the processing circuitry 115 is thereby arranged to execute at least parts of the methods as herein disclosed.

The storage medium 120 may also comprise persistent storage, which, for example, can be any single one or combination of magnetic memory, optical memory, solid state memory or even remotely mounted memory.

According to some aspects, the control unit 110 further comprises an interface 112 for communications with at least one external device such as a user terminal, the remote server 243 and/or a charging station. As such the interface 112 may comprise one or more transmitters and receivers, comprising analogue and digital components and a suitable number of ports for wireline communication. The interface 112 can be adapted for communication with other devices, such as the remote server 243, a charging station, and/or other robotic working tools. Examples of such wireless communication devices are Bluetooth^{®}, WiFi^{®} (IEEE802.11b), Global System Mobile (GSM) and LTE (Long Term Evolution), to name a few. This means that, according to some aspects, other units such as the remote server 243 are adapted to partly execute the methods as herein disclosed.

Generally, the present disclosure relates to a control unit arrangement 110 is adapted to execute any of the methods disclosed herein.

Figure 21 shows a computer program product 400 comprising computer executable instructions 410 stored on media 420 to execute any of the methods disclosed herein.

Generally, the present disclosure relates to a computer program product 400 comprising computer executable instructions 410 stored on media 420 to execute the methods as described herein.

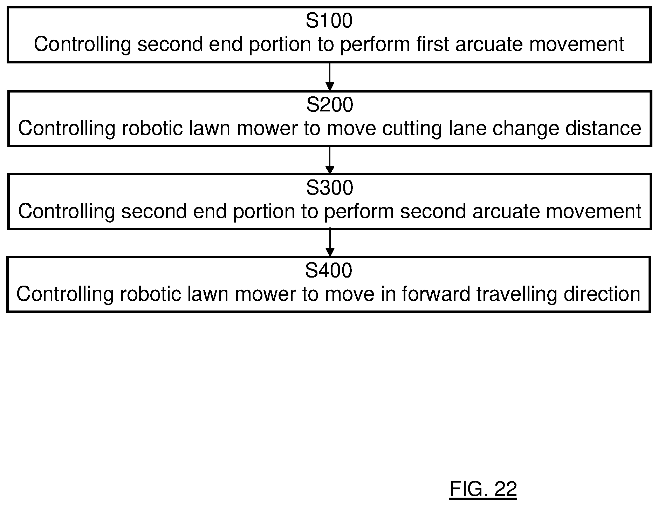

With reference to Figure 22, the present disclosure also relates to a method for controlling a robotic lawn mower 100 comprising a control unit 110 adapted to control the operation of the robotic lawn mower 100, where a first end portion 101 of the robotic lawn mower is facing a forward travelling direction F and a second end portion 102 of the robotic lawn mower is facing a reverse travelling direction R. The robotic lawn mower 100 has a longitudinal mower extension C extending between the end portions 101, 102. When the robotic lawn mower 100, during grass cutting in the forward direction F in a cutting lane 208A having a main lane extension L_{A} in an operation area 610, is approaching a boundary 220 of the operation area 610, where the boundary 220 has a main boundary extension E, the method comprises controlling S100 the robotic lawn mower 100 such that the second end portion 102 performs a first arcuate movement in a first arcuate direction D₁ along a first cutting arc 210 having a first angular span φ₁ such that the mower extension C is positioned mainly parallel to the boundary extension E. The method further comprises controlling S200 the robotic lawn mower 100 to move a cutting lane change distance D_{L}, D'_{L} mainly parallel to the boundary extension E in the forward travelling direction F until an adjacent further cutting lane 208B, having a further main lane extension L_{B}, is sufficiently reached for enabling cutting, and controlling S300 the robotic lawn mower 100 such that the second end portion 102 performs a second arcuate movement in a second arcuate direction D₂, opposite the first arcuate direction D₁, along a second cutting arc 310 having a second angular span φ₂ such that the longitudinal extension C is positioned mainly parallel to the further main lane extension L_{B}. The method also comprises controlling S400 the robotic lawn mower 100 to move in the forward travelling direction F along the further main lane extension L_{B} in the further cutting lane 208B.

According to some aspects, the first angular span φ₁ lies in the interval 260°-280°, and more preferably in the interval 265°-275°.

According to some aspects, the second angular span φ₂ lies in the interval 80°-100°, and more preferably in the interval 85°-95°.

According to some aspects, when the robotic lawn mower 100 is approaching the boundary 220, the method comprises positioning the robotic lawn mower 100 such that there is a predetermined shortest distance dₛ between the center 146 and the boundary 220.

According to some aspects, the boundary 220 is positioned between a border 139 and the operation area 610, and where the shortest distance dₛ admits the first cutting arc 210, 210' to have a closest arc portion 211, 211' that is closest to the border 139 without passing the border 139.

According to some aspects, the robotic lawn mower 100 is positioned by using input derived from a navigation sensor arrangement 175 and/or at least one environment detection device 170, 171, 173 comprised in the robotic lawn mower 100.

The present disclosure is not limited to the above, but may vary freely within the scope of the appended claims. For example, with reference to Figure 2, there is a second rotatable grass cutting disc 180 (only schematically indicated), having a rotational axle 181 positioned between the swivel attachment axis 151 and the drive wheel axis 145. This second rotatable grass cutting disc 180 can constitute a main cutting disc 180 that is operative during normal cutting, the first cutting disc 160 possibly being disengaged. When the robotic lawn mower 100 is controlled to cut grass relatively close to a boundary, for example by performing the previously described arcuate movement along a cutting arc, the main cutting disc 180 may be disengaged and the first cutting disc 160 is engaged into operation.

According to some aspects, the main cutting disc 180 has a larger diameter, and thus cutting width, than the first cutting disc 160. By only using the first cutting disc 160 when cutting grass relatively close to a boundary and using the main cutting disc 180 otherwise, energy may be saved and efficiency increased.

According to some aspects, the main cutting disc 180 is adjustable with respect to grass cutting height, manually or automatically in previous known manners. This means that the main cutting disc 180 is displaceable such that a distance between the main cutting disc 180 and the ground G can be adjusted,

The boundary 220 has a main boundary extension E, since the boundary 220 does not always follow a straight line, a main boundary extension E is according to some aspects determined from occasion to occasion, for example when and where a boundary wire is encountered, or when and where a virtual boundary is passed.

According to some aspects, an end portion 101, 102 can be defined as a rearmost of foremost point at the robotic lawn mower 100. According to some aspects, the first end portion 101 is a foremost point at the robotic lawn mower 100, facing the forward travelling direction F, and the second end portion 102 is a rearmost point at the robotic lawn mower 100, facing the rearward travelling direction R. According to some aspects, the first end portion 101 is opposite the second end portion 102.

## Claims

1. A robotic lawn mower (100) comprising a control unit (110) adapted to control the operation of the robotic lawn mower (100), and at least a first rotatable grass cutting disc (160) having a rotation axis (152), where a first end portion (101) is facing a forward travelling direction (F) and a second end portion (102) is facing a reverse travelling direction (R), the robotic lawn mower (100) having a longitudinal mower extension (C) extending between the end portions (101, 102), wherein, when the robotic lawn mower (100), during grass cutting in the forward direction (F) in a cutting lane (208A, 208'A) having a main lane extension (L_{A}, L'_{A}) in an operation area (610), is approaching a boundary (220) of the operation area (610), where the boundary (220) has a main boundary extension (E), the control unit (110) is adapted to
- control the robotic lawn mower (100) such that the second end portion (102) performs a first arcuate movement in a first arcuate direction (D₁) along a first cutting arc (210, 210') having a first angular span (φ₁, φ'₁), **characterized in that**
the first angular span (φ₁, φ'₁) is such that the mower extension (C) is positioned mainly parallel to the boundary extension (E),
and **in that** the control unit (110) is further adapted to
- control the robotic lawn mower (100) to move a cutting lane change distance (D_{L}, D'_{L}) mainly parallel to the boundary extension (E) in the forward travelling direction (F) until an adjacent further cutting lane (208B, 208'B), having a further main lane extension (L_{B}, L'_{B}), is sufficiently reached for enabling cutting,
- control the robotic lawn mower (100) such that the second end portion (102) performs a second arcuate movement in a second arcuate direction (D₂), opposite the first arcuate direction (D₁), along a second cutting arc (310, 310') having a second angular span (φ₂, φ'₂) such that the longitudinal extension (C) is positioned mainly parallel to the further main lane extension (L_{B}, L'_{B}),
- control the robotic lawn mower (100) to move in the forward travelling direction (F) along the further main lane extension (L_{B}, L'_{B}) in the further cutting lane (208B, 208'B).

2. The robotic lawn mower (100) according to claim 1, wherein the robotic lawn mower (100) comprises a body (140), at least two drive wheels (130a, 130b) arranged along a drive wheel axis (145) with a center (146), the center (146) being positioned between the drive wheels (130a, 130b), the robotic lawn mower (100) further comprising at least one swivelable wheel (131a, 131b), where, when the robotic lawn mower (100) is approaching the boundary (220), the control unit (110) is adapted to
- control the drive wheels (130a, 130b) to turn in mutually different directions such that the second end portion (102) of the robotic lawn mower (100) performs the first arcuate movement in the first arcuate direction (D₁) along the first cutting arc (210, 210') having the first angular span (φ₁, φ'₁), enabling the first cutting disc (160) to cut grass within the first cutting arc (210, 210'),
- control the drive wheels (130a, 130b) to move the robotic lawn mower (100) the cutting lane change distance (D_{L}, D'_{L}) mainly parallel to the boundary extension (E) of the boundary (220) in the forward travelling direction (F) until the adjacent further cutting lane (208B, 208') is sufficiently reached for enabling cutting,
- control the drive wheels (130a, 130b) to turn in mutually different directions such that the second end portion (102) of the robotic lawn mower (100) performs the second arcuate movement in the second arcuate direction (D₂), opposite the first arcuate direction (D₁), along the second cutting arc (310, 310') having the second angular span (φ₂, φ'₂)
- control the drive wheels (130a, 130b) to move the robotic lawn mower (100) in the forward travelling direction (F) along the further main lane extension (L_{B}, L'_{B}) in the further cutting lane (208B, 208'B).

3. The robotic lawn mower (100) according to claim 2, wherein, when the robotic lawn mower (100) is approaching the boundary (220), the control unit (110) is adapted to position the robotic lawn mower (100) such that there is a predetermined shortest distance (dₛ) between the center (146) and the boundary (220).

4. The robotic lawn mower (100) according to claim 3, wherein the boundary (220) is positioned between a border (139) and the operation area (610), and where the shortest distance (dₛ) admits the first cutting arc (210, 210') to have a closest arc portion (211, 211') that is closest to the border (139) without passing the border (139).

5. The robotic lawn mower (100) according to any one of the previous claims, wherein the first angular span (φ₁) lies in the interval 260°-280°, and more preferably in the interval 265°-275°.

6. The robotic lawn mower (100) according to any one of the previous claims, wherein the second angular span (φ₂) lies in the interval 80°-100°, and more preferably in the interval 85°-95°.

7. The robotic lawn mower (100) according to any one of the previous claims, wherein the control unit (110) is adapted to position the robotic lawn mower (100) by means of input derived from a navigation sensor arrangement (175) and/or at least one environment detection device (170, 171, 173) comprised in the robotic lawn mower (100).

8. The robotic lawn mower (100) according to claim 7, wherein the navigation sensor arrangement (175) comprises at least one of
- satellite signal navigation sensors (175a); and
- deduced reckoning sensors (175b).

9. The robotic lawn mower (100) according to claim 8, wherein the navigation sensor arrangement (175) comprises deduced reckoning sensors (175b) that include visual sensors for Simultaneous Localization And Mapping, SLAM, navigation.

10. The robotic lawn mower (100) according to any one of the claims 7-9, wherein the navigation sensor arrangement (175) is adapted for navigation by means of active local radio beacons using Ultra Wide Band, UWB.

11. The robotic lawn mower (100) according to any one of the previous claims, wherein the robotic lawn mower (100) comprises at least one environment detection device (170, 171, 173) adapted to detect objects, where said environment detection device (170, 171, 173) comprises at least one of
- a radar transceiver (170, 171),
- a camera device,
- an ultrasonic device,
- a Lidar device, and/or
- a boundary wire sensor (173).

12. A method for controlling a robotic lawn mower (100) comprising a control unit (110) adapted to control the operation of the robotic lawn mower (100), where a first end portion (101) of the robotic lawn mower is facing a forward travelling direction (F) and a second end portion (102) of the robotic lawn mower is facing a reverse travelling direction (R), the robotic lawn mower (100) having a longitudinal mower extension (C) extending between the end portions (101, 102), wherein, when the robotic lawn mower (100), during grass cutting in the forward direction (F) in a cutting lane (208A, 208'A) having a main lane extension (L_{A}, L'_{A}) in an operation area (610), is approaching a boundary (220) of the operation area (610), where the boundary (220) has a main boundary extension (E), the method comprises
controlling (S100) the robotic lawn mower (100) such that the second end portion (102) performs a first arcuate movement in a first arcuate direction (D₁) along a first cutting arc (210, 210') having a first angular span (φ₁, φ'₁), **characterized in that** the first angular span (φ₁, φ'₁) is such that the mower extension (C) is positioned mainly parallel to the boundary extension (E); and **in that** the method further comprises
controlling (S200) the robotic lawn mower (100) to move a cutting lane change distance (D_{L}, D'_{L}) mainly parallel to the boundary extension (E) in the forward travelling direction (F) until an adjacent further cutting lane (208B, 208'B), having a further main lane extension (L_{B}, L'_{B}), is sufficiently reached for enabling cutting;
controlling (S300) the robotic lawn mower (100) such that the second end portion (102) performs a second arcuate movement in a second arcuate direction (D₂), opposite the first arcuate direction (D₁), along a second cutting arc (310, 310') having a second angular span (φ₂, φ'₂) such that the longitudinal extension (C) is positioned mainly parallel to the further main lane extension (L_{B}, L'_{B}); and
controlling (S400) the robotic lawn mower (100) to move in the forward travelling direction (F) along the further main lane extension (L_{B}, L'_{B}) in the further cutting lane (208B, 208'B).

13. The method according to claim 12, wherein the first angular span (φ₁) lies in the interval 260°-280°, and more preferably in the interval 265°-275°.

14. The method according to any one of the claims 12 and 13, wherein the second angular span (φ₂) lies in the interval 80°-100°, and more preferably in the interval 85°-95°.

15. The method according to any one of the claims 12-15, wherein the robotic lawn mower (100) comprises at least two drive wheels (130a, 130b) arranged along a drive wheel axis (145) with a center (146), the center (146) being positioned between the drive wheels (130a, 130b), where, when the robotic lawn mower (100) is approaching the boundary (220), the method comprises positioning the robotic lawn mower (100) such that there is a predetermined shortest distance (dₛ) between the center (146) and the boundary (220).

16. The method according to claim 15, wherein the boundary (220) is positioned between a border (139) and the operation area (610), and where the shortest distance (dₛ) admits the first cutting arc (210, 210') to have a closest arc portion (211, 211') that is closest to the border (139) without passing the border (139).

17. The method according to any one of the claims 12-16, wherein the robotic lawn mower (100) is positioned by using input derived from a navigation sensor arrangement (175) and/or at least one environment detection device (170, 171, 173) comprised in the robotic lawn mower (100).

18. The control unit arrangement (110) of the robotic lawn mower according to any one of the claims 1-11 adapted to execute the method according to any one of the claims 12-17.

19. A computer program product (400) comprising computer executable instructions (410) stored on media (420) to cause the control unit arrangement (110) according to claim 18 to execute the method according to any one of the claims 12-17.

## Patentansprüche

1. Roboter-Rasenmäher (100), umfassend eine Steuereinheit (110), die angepasst ist, um den Betrieb des Roboter-Rasenmähers (100) zu steuern, und mindestens eine erste drehbare Grasschneidscheibe (160), die eine Drehachse (152) aufweist, wobei ein erster Endabschnitt (101) einer Vorwärtsfahrtrichtung (F) zugewandt ist und ein zweiter Endabschnitt (102) einer Rückwärtsfahrtrichtung (R) zugewandt ist, wobei der Roboter-Rasenmäher (100) eine Längsmähererstreckung (C) aufweist, die sich zwischen den Endabschnitten (101, 102) erstreckt, wobei, wenn sich der Roboter-Rasenmäher (100) während des Grasschneidens in der Vorwärtsrichtung (F) in einer Schnittbahn (208A, 208'A), die eine Hauptbahnerstreckung (L_{A}, L'_{A}) in einem Betriebsbereich (610) aufweist, einer Begrenzung (220) des Betriebsbereichs (610) nähert, wobei die Begrenzung (220) eine Hauptbegrenzungserstreckung (E) aufweist, die Steuereinheit (110) angepasst ist zum
- Steuern des Roboter-Rasenmähers (100) derart, dass der zweite Endabschnitt (102) eine erste bogenförmige Bewegung in einer ersten bogenförmigen Richtung (D₁) entlang eines ersten Schnittbogens (210, 210'), der eine erste Winkelspanne (φ₁, φ'₁) aufweist, durchführt,
**dadurch gekennzeichnet, dass** die erste Winkelspanne (φ₁, φ'₁) derart ist, dass die Mähererstreckung (C) hauptsächlich parallel zu der Begrenzungserstreckung (E) positioniert ist, und **dadurch, dass** die Steuereinheit (110) ferner angepasst ist zum
- Steuern des Roboter-Rasenmähers (100), um eine Schnittbahnwechselentfernung (D_{L}, D'_{L}) hauptsächlich parallel zu der Begrenzungserstreckung (E) in der Vorwärtsfahrtrichtung (F) zu bewegen, bis eine angrenzende weitere Schnittbahn (208B, 208'B), die eine weitere Hauptbahnerstreckung (L_{B}, L'_{B}) aufweist, ausreichend erreicht ist, um das Schneiden zu ermöglichen,
- Steuern des Roboter-Rasenmähers (100) derart, dass der zweite Endabschnitt (102) eine zweite bogenförmige Bewegung in einer zweiten bogenförmigen Richtung (D₂), entgegengesetzt zu der ersten bogenförmigen Richtung (D₁), entlang eines zweiten Schnittbogens (310, 310'), der eine zweite Winkelspanne (φ₂, φ'₂) aufweist, durchführt, derart, dass die Längserstreckung (C) hauptsächlich parallel zu der weiteren Hauptbahnerstreckung (L_{B}, L'_{B}) POSITIONIERT IST,
- Steuern des Roboter-Rasenmähers (100), um sich in der Vorwärtsfahrtrichtung (F) entlang der weiteren Hauptbahnerstreckung (L_{B}, L'_{B}) in der weiteren Schnittbahn (208B, 208'B) zu bewegen.

2. Roboter-Rasenmäher (100) nach Anspruch 1, wobei der Roboter-Rasenmäher (100) einen Körper (140), mindestens zwei Antriebsräder (130a, 130b) umfasst, die entlang einer Antriebsradachse (145) mit einem Zentrum (146) angeordnet sind, wobei das Zentrum (146) zwischen den Antriebsrädern (130a, 130b) positioniert ist, der Roboter-Rasenmäher (100) ferner umfassend mindestens ein schwenkbares Rad (131a, 131b), wobei, wenn sich der Roboter-Rasenmäher (100) der Begrenzung (220) nähert, die Steuereinheit (110) angepasst ist zum
- Steuern der Antriebsräder (130a, 130b), um in unterschiedlichen Richtungen derart einzuschlagen, dass der zweite Endabschnitt (102) des Roboter-Rasenmähers (100) die erste bogenförmige Bewegung in der ersten bogenförmigen Richtung (D₁) entlang des ersten Schnittbogens (210, 210'), der die erste Winkelspanne (φ₁, φ'₁) aufweist, durchführt, wodurch ermöglicht wird, dass die erste Schnittscheibe (160) Gras innerhalb des ersten Schnittbogens (210, 210') schneidet,
- Steuern der Antriebsräder (130a, 130b), um den Roboter-Rasenmäher (100) um die Schnittbahnwechselentfernung (D_{L}, D'_{L}) hauptsächlich parallel zu der Begrenzungserstreckung (E) der Begrenzung (220) in der Vorwärtsfahrtrichtung (F) zu bewegen, bis die angrenzende weitere Schnittbahn (208B, 208') ausreichend erreicht ist, um das Schneiden zu ermöglichen,
- Steuern der Antriebsräder (130a, 130b), um in unterschiedlichen Richtungen derart einzuschlagen, dass der zweite Endabschnitt (102) des Roboter-Rasenmähers (100) die zweite bogenförmige Bewegung in der zweiten bogenförmigen Richtung (D₂), entgegengesetzt zu der ersten bogenförmigen Richtung (D₁), entlang des zweiten Schnittbogens (310, 310'), der die zweite Winkelspanne (φ₂, φ'₂) aufweist, durchführt
- Steuern der Antriebsräder (130a, 130b), um den Roboter-Rasenmäher (100) in der Vorwärtsfahrtrichtung (F) entlang der weiteren Hauptbahnerstreckung (L_{B}, L'_{B}) in der weiteren Schnittbahn (208B, 208'B) zu bewegen.

3. Roboter-Rasenmäher (100) nach Anspruch 2, wobei, wenn sich der Roboter-Rasenmäher (100) der Begrenzung (220) nähert, die Steuereinheit (110) angepasst ist, um den Roboter-Rasenmäher (100) derart zu positionieren, dass eine vorbestimmte kürzeste Entfernung (dₛ) zwischen dem Zentrum (146) und der Begrenzung (220) vorhanden ist.

4. Roboter-Rasenmäher (100) nach Anspruch 3, wobei die Begrenzung (220) zwischen einer Grenze (139) und dem Betriebsbereich (610) positioniert ist, und wobei die kürzeste Entfernung (dₛ) zulässt, dass der erste Schnittbogen (210, 210') einen nächstgelegenen Bogenabschnitt (211, 211') aufweist, der der Grenze (139) am nächsten ist, ohne die Grenze (139) zu überschreiten.

5. Roboter-Rasenmäher (100) nach einem der vorstehenden Ansprüche, wobei die erste Winkelspanne (φ₁) in dem Intervall 260°-280° und mehr bevorzugt in dem Intervall 265°-275° liegt.

6. Roboter-Rasenmäher (100) nach einem der vorstehenden Ansprüche, wobei die zweite Winkelspanne (φ₂) in dem Intervall 80°-100° und mehr bevorzugt in dem Intervall 85°-95° liegt.

7. Roboter-Rasenmäher (100) nach einem der vorstehenden Ansprüche, wobei die Steuereinheit (110) angepasst ist, um den Roboter-Rasenmäher (100) mittels einer Eingabe zu positionieren, die von einer Navigationssensoranordnung (175) und/oder mindestens einer Umgebungserfassungsvorrichtung (170, 171, 173) abgeleitet wird, die in dem Roboter-Rasenmäher (100) umfasst ist.

8. Roboter-Rasenmäher (100) nach Anspruch 7, wobei die Navigationssensoranordnung (175) mindestens eines umfasst von
- Satellitensignalnavigationssensoren (175a); und
- Koppelnavigationssensoren (175b).

9. Roboter-Rasenmäher (100) nach Anspruch 8, wobei die Navigationssensoranordnung (175) Koppelnavigationssensoren (175b) umfasst, die visuelle Sensoren für Simultaneous Localization And Mapping-Navigation, SLAM-Navigation, einschließen.

10. Roboter-Rasenmäher (100) nach einem der Ansprüche 7 bis 9, wobei die Navigationssensoranordnung (175) für die Navigation mittels aktiver lokaler Funkbaken unter Verwendung von Ultra Wide Band, UWB, angepasst ist.

11. Roboter-Rasenmäher (100) nach einem der vorstehenden Ansprüche, wobei der Roboter-Rasenmäher (100) mindestens eine Umgebungserfassungsvorrichtung (170, 171, 173) umfasst, die angepasst ist, um Objekte zu erfassen, wobei die Umgebungserfassungsvorrichtung (170, 171, 173) mindestens eines umfasst von
- einem Radarsenderempfänger (170, 171),
- einer Kameravorrichtung,
- einer Ultraschallvorrichtung,
- einer Lidar-Vorrichtung, und/oder
- einem Begrenzungsdrahtsensor (173).

12. Verfahren zum Steuern eines Roboter-Rasenmähers (100), umfassend eine Steuereinheit (110), die angepasst ist, um den Betrieb des Roboter-Rasenmähers (100) zu steuern, wobei ein erster Endabschnitt (101) des Roboter-Rasenmähers einer Vorwärtsfahrtrichtung (F) zugewandt ist und ein zweiter Endabschnitt (102) des Roboter-Rasenmähers einer Rückwärtsfahrtrichtung (R) zugewandt ist, wobei der Roboter-Rasenmäher (100) eine Längsmähererstreckung (C) aufweist, die sich zwischen den Endabschnitten (101, 102) erstreckt, wobei, wenn sich der Roboter-Rasenmäher (100) während des Grasschneidens in der Vorwärtsrichtung (F) in einer Schnittbahn (208A, 208'A), die eine Hauptbahnerstreckung (L_{A}, L'_{A}) in einem Betriebsbereich (610) aufweist, einer Begrenzung (220) des Betriebsbereichs (610) nähert, wobei die Begrenzung (220) eine Hauptbegrenzungserstreckung (E) aufweist, das Verfahren umfasst
Steuern (S100) des Roboter-Rasenmähers (100) derart, dass der zweite Endabschnitt (102) eine erste bogenförmige Bewegung in einer ersten bogenförmigen Richtung (D₁) entlang eines ersten Schnittbogens (210, 210'), der eine erste Winkelspanne (φ₁, φ'₁) aufweist, durchführt,
**dadurch gekennzeichnet, dass** die erste Winkelspanne (φ₁, φ'₁) derart ist, dass die Mähererstreckung (C) hauptsächlich parallel zu der Begrenzungserstreckung (E) positioniert ist; und **dadurch, dass** das Verfahren ferner umfasst
Steuern (S200) des Roboter-Rasenmähers (100), um eine Schnittbahnwechselentfernung (D_{L}, D'_{L}) hauptsächlich parallel zu der Begrenzungserstreckung (E) in der Vorwärtsfahrtrichtung (F) zu bewegen, bis eine angrenzende weitere Schnittbahn (208B, 208'B), die eine weitere Hauptbahnerstreckung (L_{B}, L'_{B}) aufweist, ausreichend erreicht ist, um das Schneiden zu ermöglichen;
Steuern (S300) des Roboter-Rasenmähers (100) derart, dass der zweite Endabschnitt (102) eine zweite bogenförmige Bewegung in einer zweiten bogenförmigen Richtung (D₂), entgegengesetzt zu der ersten bogenförmigen Richtung (D₁), entlang eines zweiten Schnittbogens (310, 310'), der eine zweite Winkelspanne (φ2, φ'2) aufweist, durchführt, derart, dass die Längserstreckung (C) hauptsächlich parallel zu der weiteren Hauptbahnerstreckung (LB, L'B) positioniert ist; und
Steuern (S400) des Roboter-Rasenmähers (100), um sich in der Vorwärtsfahrtrichtung (F) entlang der weiteren Hauptbahnerstreckung (L_{B}, L'_{B}) in der weiteren Schnittbahn (208B, 208 B) zu bewegen.

13. Verfahren nach Anspruch 12, wobei die erste Winkelspanne (φ₁) in dem Intervall 260°-280° und mehr bevorzugt in dem Intervall 265°-275° liegt.

14. Verfahren nach einem der Ansprüche 12 und 13, wobei die zweite Winkelspanne (φ₂) in dem Intervall 80°-100° und mehr bevorzugt in dem Intervall 85°-95° liegt.

15. Verfahren nach einem der Ansprüche 12 bis 15, wobei der Roboter-Rasenmäher (100) mindestens zwei Antriebsräder (130a, 130b) umfasst, die entlang einer Antriebsradachse (145) mit einem Zentrum (146) angeordnet sind, wobei das Zentrum (146) zwischen den Antriebsrädern (130a, 130b) positioniert ist, wobei, wenn sich der Roboter-Rasenmäher (100) der Begrenzung (220) nähert, das Verfahren das Positionieren des Roboter-Rasenmähers (100) derart umfasst, dass eine vorbestimmte kürzeste Entfernung (dₛ) zwischen dem Zentrum (146) und der Begrenzung (220) vorhanden ist.

16. Verfahren nach Anspruch 15, wobei die Begrenzung (220) zwischen einer Grenze (139) und dem Betriebsbereich (610) positioniert ist, und wobei die kürzeste Entfernung (dₛ) zulässt, dass der erste Schnittbogen (210, 210') einen nächstgelegenen Bogenabschnitt (211, 211') aufweist, der der Grenze (139) am nächsten ist, ohne die Grenze (139) zu überschreiten.

17. Verfahren nach einem der Ansprüche 12 bis 16, wobei der Roboter-Rasenmäher (100) durch Verwenden einer Eingabe positioniert wird, die von einer Navigationssensoranordnung (175) und/oder mindestens einer Umgebungserfassungsvorrichtung (170, 171, 173) abgeleitet wird, die in dem Roboter-Rasenmäher (100) umfasst ist.

18. Steuereinheitsanordnung (110) des Roboter-Rasenmähers nach einem der Ansprüche 1 bis 11, die angepasst ist, um das Verfahren nach einem der Ansprüche 12 bis 17 auszuführen.

19. Computerprogrammprodukt (400), umfassend computerausführbare Anweisungen (410), die auf einem Medium (420) gespeichert sind, um zu bewirken, dass die Steuereinheitsanordnung (110) nach Anspruch 18 das Verfahren nach einem der Ansprüche 12 bis 17 ausführt.

## Revendications

1. Tondeuse à gazon robotique (100) comprenant une unité de commande (110) conçue pour commander le fonctionnement de la tondeuse à gazon robotique (100), et au moins un premier disque rotatif de tonte du gazon (160) présentant un axe de rotation (152), où une première partie d'extrémité (101) fait face à une direction de déplacement vers l'avant (F) et une seconde partie d'extrémité (102) fait face à une direction de déplacement vers l'arrière (R), la tondeuse à gazon robotique (100) présentant une extension de tondeuse longitudinale (C) s'étendant entre les parties d'extrémité (101, 102), dans laquelle, lorsque la tondeuse à gazon robotique (100), pendant la tonte du gazon dans la direction avant (F) dans une voie de coupe (208A, 208'A) présentant une extension de voie principale (L_{A}, L'_{A}) dans une zone de fonctionnement (610), s'approche d'une délimitation (220) de la zone de fonctionnement (610), où la délimitation (220) présente une extension de délimitation principale (E), l'unité de commande (110) est conçue pour
- commander la tondeuse à gazon robotique (100) de telle sorte que la seconde partie d'extrémité (102) réalise un premier déplacement en arc dans une première direction en arc (D₁) le long d'un premier arc de coupe (210, 210') présentant une première portée angulaire (φ₁, φ'₁), **caractérisée en ce que** la première portée angulaire (φ₁, φ'₁) est telle que l'extension de tondeuse (C) est positionnée principalement parallèlement à l'extension de délimitation (E), et **en ce que** l'unité de commande (110) est en outre conçue pour
- commander la tondeuse à gazon robotique (100) afin de se déplacer sur une distance de changement de voie de coupe (D_{L}, D'_{L}) principalement parallèle à l'extension de délimitation (E) dans la direction de déplacement vers l'avant (F) jusqu'à ce qu'une voie de coupe adjacente supplémentaire (208B, 208'B), présentant une extension de voie principale supplémentaire (L_{B}, L'_{B}), soit suffisamment atteinte pour permettre la coupe,
- commander la tondeuse à gazon robotique (100) de telle sorte que la seconde partie d'extrémité (102) réalise un second déplacement en arc dans une seconde direction en arc (D₂), opposée à la première direction en arc (D₁), le long d'un second arc de coupe (310, 310') présentant une seconde portée angulaire (φ₂, φ'₂) de telle sorte que l'extension longitudinale (C) est positionnée principalement parallèlement à l'extension de voie principale supplémentaire (L_{B}, L'_{B}),
- commander la tondeuse à gazon robotique (100) pour qu'elle se déplace dans la direction de déplacement vers l'avant (F) le long de l'extension de voie principale supplémentaire (L_{B}, L'_{B}), dans la voie de coupe supplémentaire (208B, 208'B).

2. Tondeuse à gazon robotique (100) selon la revendication 1, dans laquelle la tondeuse à gazon robotique (100) comprend un corps (140), au moins deux roues motrices (130a, 130b) agencées le long d'un axe de roue motrice (145) avec un centre (146), le centre (146) étant positionné entre les roues motrices (130a, 130b), la tondeuse à gazon robotique (100) comprenant en outre au moins une roue pivotante (131a, 131b), dans lequel, lorsque la tondeuse à gazon robotique (100) s'approche de la délimitation (220), l'unité de commande (110) est conçue pour
- commander les roues motrices (130a, 130b) afin qu'elles tournent dans des directions mutuellement différentes de telle sorte que la seconde partie d'extrémité (102) de la tondeuse à gazon robotique (100) réalise le premier déplacement en arc dans la première direction en arc (D₁) le long du premier arc de coupe (210, 210') présentant la première portée angulaire (φ₁, φ'₁), permettant au premier disque de coupe (160) de tondre le gazon au sein du premier arc de coupe (210, 210'),
- commander les roues motrices (130a, 130b) afin de déplacer la tondeuse à gazon robotique (100) sur une distance de changement de voie de coupe (D_{L}, D'_{L}) principalement parallèle à l'extension de délimitation (E) de la
délimitation (220) dans la direction de déplacement vers l'avant (F) jusqu'à ce que la voie de coupe adjacente supplémentaire (208B, 208') soit suffisamment atteinte pour permettre la coupe,
- commander les roues motrices (130a, 130b) pour qu'elles tournent dans des directions mutuellement différentes de telle sorte que la seconde partie d'extrémité (102) de la tondeuse à gazon robotique (100) réalise le second déplacement en arc dans la seconde direction en arc (D₂), opposée à la première direction en arc (D₁), le long du second arc de coupe (310, 310') présentant la seconde portée angulaire (φ₂, φ'₂)
- commander les roues motrices (130a, 130b) afin de déplacer la tondeuse à gazon robotique (100) dans la direction de déplacement vers l'avant (F) le long de l'extension de voie principale supplémentaire (L_{B}, L'_{B}) DANS LA voie de coupe supplémentaire (208B, 208'B).

3. Tondeuse à gazon robotique (100) selon la revendication 2, dans laquelle, lorsque la tondeuse à gazon robotique (100) s'approche de la limite (220), l'unité de commande (110) est conçue pour positionner la tondeuse à gazon robotique (100) de telle sorte qu'il y a une distance la plus courte prédéterminée (dₛ) entre le centre (146) et la délimitation (220).

4. Tondeuse à gazon robotique (100) selon la revendication 3, dans laquelle la limite (220) est positionnée entre une bordure (139) et la zone de fonctionnement (610), et où la distance la plus courte (dₛ) permet au premier arc de coupe (210, 210') d'avoir une partie d'arc la plus proche (211, 211') qui est la plus proche de la bordure (139) sans passer par la bordure (139).

5. Tondeuse à gazon robotique (100) selon l'une quelconque des revendications précédentes, dans laquelle la première portée angulaire (φ₁) se situe dans l'intervalle de 260° à 280°, et plus préférablement dans l'intervalle de 265° à 275°.

6. Tondeuse à gazon robotique (100) selon l'une quelconque des revendications précédentes, dans laquelle la seconde portée angulaire (φ₂) se situe dans l'intervalle de 80° à 100°, et plus préférablement dans l'intervalle de 85° à 95°.

7. Tondeuse à gazon robotique (100) selon l'une quelconque des revendications précédentes, dans laquelle l'unité de commande (110) est conçue pour positionner la tondeuse à gazon robotique (100) au moyen d'une entrée dérivée d'un agencement de capteurs de navigation (175) et/ou d'au moins un dispositif de détection d'environnement (170, 171, 173) compris dans la tondeuse à gazon robotique (100).

8. Tondeuse à gazon robotique (100) selon la revendication 7, dans laquelle l'agencement de capteurs de navigation (175) comprend au moins l'un parmi
- des capteurs de navigation par signal satellite (175a) ; et
- des capteurs de calcul déduits (175b).

9. Tondeuse à gazon robotique (100) selon la revendication 8, dans laquelle l'agencement de capteurs de navigation (175) comprend des capteurs de calcul déduits (175b) qui comportent des capteurs visuels pour la navigation de localisation et de cartographie simultanées, SLAM.

10. Tondeuse à gazon robotique (100) selon l'une quelconque des revendications 7 à 9, dans laquelle l'agencement de capteurs de navigation (175) est adapté à la navigation au moyen de balises radio locales actives à l'aide d'une bande ultra large, UWB.

11. Tondeuse à gazon robotique (100) selon l'une quelconque des revendications précédentes, dans laquelle la tondeuse à gazon robotique (100) comprend au moins un dispositif de détection d'environnement (170, 171, 173) conçu pour détecter des objets, où ledit dispositif de détection d'environnement (170, 171, 173) comprend au moins l'un parmi
- un émetteur-récepteur radar (170, 171),
- un dispositif de prise de vues,
- un dispositif à ultrasons,
- un dispositif Lidar, et/ou
- un capteur de fil de délimitation (173).

12. Procédé destiné à commander une tondeuse à gazon robotique (100) comprenant une unité de commande (110) conçue pour commander le fonctionnement de la tondeuse à gazon robotique (100), où une première partie d'extrémité (101) de la tondeuse à gazon robotique fait face à une direction de déplacement vers l'avant (F) et une seconde partie d'extrémité (102) de la tondeuse à gazon robotique fait face à une direction de déplacement vers l'arrière (R), la tondeuse à gazon robotique (100) présentant une extension de tondeuse longitudinale (C) s'étendant entre les parties d'extrémité (101, 102), dans lequel, lorsque la tondeuse à gazon robotique (100), pendant la tonte du gazon dans la direction avant (F) dans une voie de coupe (208A, 208'A) présentant une extension de voie principale (L_{A}, L'_{A}) dans une zone de fonctionnement (610), s'approche d'une délimitation (220) de la zone de fonctionnement (610), où la délimitation (220) présente une extension de délimitation principale (E), le procédé comprend
la commande (S100) de la tondeuse à gazon robotique (100) de telle sorte que la seconde partie d'extrémité (102) réalise un premier déplacement en arc dans une première direction en arc (D₁) le long d'un premier arc de coupe (210, 210') présentant une première portée angulaire (φ₁, φ'₁), **caractérisé en ce que** la première portée angulaire (φ₁, φ'₁) est de telle sorte que l'extension de tondeuse (C) est positionnée principalement parallèlement à l'extension de délimitation (E) ; et **en ce que** le procédé comprend en outre
la commande (S200) de la tondeuse à gazon robotique (100) pour se déplacer sur une distance de changement de voie de coupe (D_{L}, D'_{L}) principalement parallèle à l'extension de délimitation (E) dans la direction de déplacement vers l'avant (F) jusqu'à ce qu'une voie de coupe adjacente supplémentaire (208B, 208'B), présentant une extension de voie principale supplémentaire (L_{B}, L'_{B}) , soit suffisamment atteinte pour permettre la coupe ;
la commande (S300) de la tondeuse à gazon robotique (100) de telle sorte que la seconde partie d'extrémité (102) réalise un second déplacement en arc dans une seconde direction en arc (D₂), opposée à la première direction en arc (D₁), le long d'un second arc de coupe (310, 310') présentant une seconde portée angulaire (φ₂, φ'₂) de telle sorte que l'extension longitudinale (C) est positionnée principalement parallèlement à l'extension de voie principale supplémentaire (L_{B}, L'_{B}) ; et
la commande (S400) de la tondeuse à gazon robotique (100) pour qu'elle se déplace dans la direction de déplacement vers l'avant (F) le long de l'extension de voie principale supplémentaire (L_{B}, L'_{B}) dans la voie de coupe supplémentaire (208B, 208 B).

13. Procédé selon la revendication 12, dans lequel la première portée angulaire (φ₁) se situe dans l'intervalle de 260° à 280°, et plus préférablement dans l'intervalle de 265° à 275°.

14. Procédé selon l'une quelconque des revendications 12 et 13, dans lequel la portée angulaire de secondes (φ₂) se situe dans l'intervalle de 80° à 100°, et plus préférablement dans l'intervalle de 85° à 95°.

15. Procédé selon l'une quelconque des revendications 12 à 15, dans lequel la tondeuse à gazon robotique (100) comprend au moins deux roues motrices (130a, 130b) agencées le long d'un axe de roues motrices (145) avec un centre (146), le centre (146) étant positionné entre les roues motrices (130a, 130b), où, lorsque la tondeuse à gazon robotique (100) s'approche de la délimitation (220), le procédé comprend le positionnement de la tondeuse à gazon robotique (100) de telle sorte qu'il y a une distance la plus courte prédéterminée (dₛ) entre le centre (146) et la délimitation (220).

16. Procédé selon la revendication 15, dans lequel la délimitation (220) est positionnée entre une bordure (139) et la zone de fonctionnement (610), et où la distance la plus courte (dₛ) permet au premier arc de coupe (210, 210') d'avoir une partie d'arc la plus proche (211, 211') qui est la plus proche de la délimitation (139) sans passer par la bordure (139).

17. Procédé selon l'une quelconque des revendications 12 à 16, dans lequel la tondeuse à gazon robotique (100) est positionnée à l'aide d'une entrée dérivée d'un agencement de capteurs de navigation (175) et/ou d'au moins un dispositif de détection d'environnement (170, 171, 173) compris dans la tondeuse à gazon robotique (100).

18. Agencement d'unité de commande (110) de la tondeuse à gazon robotique selon l'une quelconque des revendications 1 à 11, conçu pour exécuter le procédé selon l'une quelconque des revendications 12 à 17.

19. Produit programme d'ordinateur (400) comprenant des instructions exécutables par ordinateur (410) stockées sur un support (420) pour amener l'agencement d'unité de commande (110) selon la revendication 18 à exécuter le procédé selon l'une quelconque des revendications 12 à 17.
